# FASCICULE DE BREVET EUROPEEN

(11) **EP 1 709 370 B1**
(45) Date de publication et mention de la délivrance du brevet: **12.11.2008**
(21) Numéro de dépôt: 05717401.3
(22) Date de dépôt: 11.01.2005
(51) Int. Cl.: F24J 2/04

(54) **CAPTEUR SOLAIRE THERMIQUE A AIR**
LUFT-SOLARWÄRMEKOLLEKTOR
AIR HEAT SOLAR COLLECTOR

(30) Priorité: 20.01.2004 FR 0400485
(43) Date de publication de la demande: 11.10.2006
(73) Titulaire: DANI ALU, 69 280 Sainte Consorce (FR)
(72) Inventeur: DANI ALU, 69 280 Sainte Consorce (FR)
(74) Mandataire: Guerre, Dominique
(86) Numéro de dépôt international: PCT/FR2005/000065
(87) Numéro de publication internationale: WO 2005/080887

(56) Documents cités:
- DE-A- 2 658 889
- DE-A- 3 005 462
- US-A- 4 016 861
- US-A- 4 099 513
- US-A- 4 144 871
- US-A- 4 154 222
- US-A- 4 262 659
- US-A- 4 353 357
- US-A- 4 396 009
- US-A- 4 512 333

## Description

La présente invention a pour objet un capteur solaire thermique à air.

FR-A-2 831 247 décrit des panneaux solaires à air comprenant deux étages de circulation de l'air. L'air chemine d'une extrémité jusqu'à l'autre extrémité au premier étage, puis au second revient vers la première extrémité.

Or après de longues études, le demandeur a mis au point un capteur solaire thermique à air de conception simple, ne possédant qu'un étage de circulation d'air, rendant sa construction plus aisée. Le document US 4 512 333 décrit un capteur de ce type, et constitue l'état de la technique le plus proche.

De plus, il permet d'installer les embouchures d'entrée et de sortie d'air relativement près l'une de l'autre en cas de besoin, sans perte notable d'efficacité, ce qui rend son montage très polyvalent.

Les caractéristiques de son système d'échangeur le rendent performant tant pour absorber le rayonnement solaire que pour restituer les calories captées.

La présente demande a plus précisément pour objet un capteur solaire à air comprenant un caisson, de forme généralement parallélépipédique, comportant sur sa face supérieure, qui est la face orientée vers le soleil, un matériau transparent qui peut être notamment en verre, ou en matériau synthétique du type polycarbonate simple ou alvéolaire.

Sous le matériau transparent se trouvent des chicanes réceptrices du rayonnement solaire. Rappelons que des chicanes sont des pièces destinées à allonger le circuit que doivent parcourir les gaz chauds, en vue d'augmenter les échanges de chaleur dans les appareils de chauffage et qui contrarient le cheminement naturel des gaz en mouvement.

Ces chicanes peuvent notamment être réalisées en aluminium ou en tôle notamment d'acier, fixées sur une plaque en matériau de type aluminium, ou tôle qui elle même repose sur un matériau de type isolant et rigide faisant partie de la structure du capteur.

Elles sont installées sur la plaque inférieure dans le sens de la longueur du capteur qui est aussi le sens du flux d'air. Elles sont de préférence de couleur foncée, notamment noires, pour mieux capter la lumière.

Dans des conditions préférentielles de mise en oeuvre de l'invention, ces chicanes, fixées sur la plaque inférieure par rapport à la plaque transparente qui représente la plaque supérieure, présentent la particularité d'être en forme de V.

La surface de ces chicanes posées, recouvrant la plaque inférieure, peut être de 50% de la surface du capteur, de 80%, voire de 100%.

Des ouvertures permettant une circulation d'air peuvent être prévues sur les montants latéraux entre la plaque inférieure en aluminium, ou tôle, où sont fixées les chicanes, et la plaque supérieure, qui est la plaque transparente par laquelle les rayons de soleil passent.

Dans le cas de la présente invention, le nombre, la forme et la façon de fixer ces chicanes revêtent un caractère et un critère important, sur les rendements de ce capteur. En effet, les chicanes en forme de V étant fixées sur la plaque inférieure par la partie la plus saillante, donc à angle vif, elles offrent peu de pont thermique.

Dans des conditions préférentielles de l'invention entre l'angle saillant de la chicane et la plaque inférieure est inséré un joint.

Si l'attache de la chicane à la plaque inférieure se fait avec des vis, le ou les joints seront circulaires. La conséquence directe est que la chicane ne touche absolument plus la plaque inférieure.

Dans d'autres conditions préférentielles de l'invention, s'agissant d'un capteur à un seul niveau de passage de l'air, si on opte pour la solution avec entrée et sortie de l'air par deux trous débouchant, pratiqués à la plaque inférieure, le meilleur emplacement pour pratiquer ces trous serait qu'ils soient les plus éloignés l'un de l'autre pour que le maximum de calories soient absorbées.

Si cette condition n'est pas requise, des déperditions calorifiques plus importantes peuvent se faire par le matériau transparent, voire par la structure. Ces déperditions seront d'autant plus importantes que le capteur est de grande taille, sa surface pouvant être de 2, 3, ou 4 mètres carrés.

Cette conséquence limite ces possibilités de pose, notamment si le support est une toiture.

C'est pourquoi la présente invention a également pour objet un capteur solaire à air, plus précisément, la présente invention a pour objet un système de pertes de charge sur l'air, entre la plaque inférieure et la plaque supérieure, transparente, permettant de pouvoir récupérer le maximum de calories captées lorsque l'entrée et la sortie de l'air par des orifices, des tubulures, ou cheminées se trouvant sur la face inférieure, et lorsque les dites cheminées doivent être proches parce que le support offre peu de possibilités, plus précisément lorsque l'entraxe pour le raccordement du capteur n'est par exemple que de 50 cm, 1 mètre, 2 mètres, 3 mètres etc. que les cheminées, ou les tubulures sont côte à côte.

Dans des conditions préférentielles de mise en oeuvre, la perte de charge est obtenue par la canalisation de l'air.

Cette canalisation se traduit par une cloison, ou plusieurs cloisons, dans le capteur solaire. Ces cloisons, dans des conditions préférentielles de l'invention, sont des barres profilées notamment en aluminium, par exemple en forme de L ou de T, avantageusement fixées sur la plaque inférieure. Les hauteurs de ces cloisons, qui sont situées dans le capteur entre la plaque inférieure et la plaque supérieure transparente, peuvent être de 50% jusqu'à 130% de l'espacement entre lesdites plaque inférieure et supérieure.

La hauteur 100% a pour conséquence que les extrémités de la barre profilée dans le sens de la hauteur touche la plaque inférieure par la base de la barre, qui est aussi le point de fixation avec la plaque inférieure - fixation pouvant se faire par vis - et l'autre extrémité qui vient toucher la plaque transparente. La valeur 130% a pour conséquence que la hauteur de la barre profilée dépasse l'horizontalité, qui serait faite par une plaque rigide posée sur le capteur, le verre trempé par exemple.

Dans d'autres conditions de mise en oeuvre de l'invention, si la plaque transparente est en matériau synthétique, par exemple en polycarbonate alvéolaire, et que, par définition, un capteur solaire peut avoir une surface conséquente, surface pouvant aller jusqu'à 4 mètres carrés pour un module, il faut des renforts pour qu'elle garde son horizontalité, surtout si la plaque synthétique transparente est fine, ceci aussi bien pour une plaque d'une seule épaisseur que pour une plaque alvéolaire. Il y a affaissement.

C'est pourquoi la présente invention a pour objet de mettre des barres, par exemple en profilé, pour donner une flèche à la plaque transparente synthétique vers l'extérieur. Outre d'avoir un système de perte de charge, ce procédé permet de tendre la plaque synthétique vers l'extérieur, ceci évitant que pendant sa manipulation, elle ne fasse des oscillations vers l'extérieur.

Ce procédé permet aussi de mieux maintenir la plaque lorsque celle-ci se dilate et se rétracte par des chauds et froids successifs.

Dans d'autres conditions de mise en oeuvre, cette flèche vers l'extérieur pourra être obtenue par des plots de forme circulaire, carrée, rectangulaire.

Dans d'autres conditions préférentielles, ce principe de pertes de charge situé entre une entrée et une sortie du capteur donne beaucoup de possibilités pour situer ces orifices, Le choix du positionnement de ces orifices détermine le positionnement des cloisons, et leur longueur, ainsi que de la cloison transversale comme on le verra ci-après. Un cheminement judicieux de l'air a pour conséquence de récupérer le maximum de calories et de limiter la déperdition calorifique.

Un joint situé entre la base de la cloison en aluminium, ou tôle, et la plaque inférieure évite les ponts thermiques.

La présente invention a pour objet un capteur solaire à air muni de chicanes réceptrices isolées de leur support, permettant d'améliorer le rendement.

La présente invention a aussi pour objet un système de pertes de charge sur l'air permettant de canaliser, système permettant de pouvoir positionner les orifices entrées et sorties par lesquels l'air circule indifféremment, et dans d'autres conditions préférentielles, de pouvoir outre canaliser l'air, maintenir dans une position horizontale la plaque supérieure transparente, si celle-ci est en matériau synthétique, par exemple en PMMA ou en polycarbonate, ou de lui donner une flèche vers l'extérieur, si les cloisons dépassent le 100%, le 100% étant l'horizontalité de la plaque synthétique.

En résumé, le présent capteur est fondé sur les principes suivants :
Dans un caisson de forme généralement parallélépipédique :
   - présence de deux cloisons longitudinales sensiblement rectilignes, dont la longueur est supérieure à la moitié de la longueur du capteur,
   - présence de chicanes réceptrices du rayonnement solaire, allongées dans la direction de la longueur du capteur,
   - un seul niveau de passage de l'air,
   - de préférence, présence d'une plaque (ci-après « plaque transversale ») installée sensiblement perpendiculairement aux cloisons longitudinales, entre les deux cloisons longitudinales et entre l'entrée et la sortie d'air, pour contraindre l'air à circuler de la manière souhaitée.

L'air est canalisé par les deux cloisons longitudinales et sa circulation est de préférence modifiée par la plaque transversale.

Sa construction est très simple, de même que sa réalisation et son efficacité sont remarquables.

Par référence à un parallélépipède rectangle schématisant le volume interne du caisson du capteur, dans ce qui suit, longueur du capteur signifie longueur du parallélépipède, largeur du capteur signifie largeur du parallélépipède, hauteur du capteur signifie hauteur du parallélépipède, les extrémités du capteur correspondent aux petits côtés et les côtés du capteur correspondent aux grands côtés du parallélépipède.

La présente invention a pour objet un capteur solaire à air, comprenant un caisson, de forme généralement parallélépipédique, comportant une entrée d'air et une sortie d'air situées de part et d'autre du milieu du caisson dans la direction de la longueur, une paroi supérieure, en matériau transparent, une paroi inférieure et des parois latérales, caractérisé en ce que ledit capteur solaire comprend un seul niveau de passage de l'air, en ce que entre la paroi supérieure et la paroi inférieure sont installées des chicanes réceptrices du rayonnement solaire, allongées dans la direction de la longueur du capteur, dont la surface représente au moins 50% de celle de la paroi supérieure ou de la paroi inférieure, ainsi que deux ou plus de deux cloisons longitudinales sensiblement rectilignes dont la hauteur est supérieure ou égale à 50% de la hauteur du capteur, et en ce que les chicanes réceptrices ont en coupe transversale une forme évasée et une faible surface de contact avec la paroi inférieure sur laquelle elles sont avantageusement fixées.

Sous la paroi inférieure est de préférence prévue une plaque isolante, notamment rigide, réalisée par exemple en mousse polyuréthane.

Dans des conditions de mise en oeuvre de l'invention, une plaque est installée sensiblement perpendiculairement aux cloisons longitudinales, entre les deux cloisons longitudinales et entre l'entrée et la sortie d'air. Cette plaque ou ces plaques (ci-après « cloison(s) transversale(s) ») dans le cas de plusieurs montages analogues juxtaposés sont de préférence les seuls obstacles transversaux au déplacement longitudinal de l'air.

Les cloisons longitudinales partitionnent le volume interne en au moins 3 zones allongées dans la direction de la longueur du capteur : une zone centrale, comportant la cloison transversale optionnelle, et deux zones externes ou latérales. Si par exemple 3 cloisons longitudinales sont utilisées, les cloisons transversales optionnelles seront alors installées dans les deux zones centrales.

L'entrée d'air et la sortie d'air sont de préférence situées chacune vers ou à une extrémité du capteur. Elles sont de préférence ménagées dans la paroi inférieure du capteur. L'utilisation des expressions « l'entrée d'air et la sortie d'air » ne signifie pas qu'il n'y a qu'un orifice de chaque, même si c'est de préférence le cas. Par exemple, dans le cas de l'utilisation de trois cloisons longitudinales, on pourra avoir un seul orifice d'entrée centré sur la cloison centrale, ou deux orifices, un dans chacune des deux zones centrales.

Les chicanes réceptrices ont une surface qui représente au moins 50% de celle de la paroi supérieure ou de la paroi inférieure, avantageusement au moins 60%, de préférence au moins 70%, notamment au moins 80%, tout particulièrement au moins 90%. Par « surface », on entend la surface apparente des chicanes réceptrices, vues du dessus du capteur. Par exemple dans le cas de chicanes réceptrices en forme de V à 90° en coupe transversale, la surface réelle des chicanes sera la « surface » ci-dessus multipliée par 1,41 (racine de 2).

Les chicanes réceptrices ont selon l'invention une faible surface de contact avec la paroi inférieure sur laquelle elles sont avantageusement fixées et notamment en coupe transversale une forme évasée par exemple semi-circulaire et de préférence en forme de V ou de W. Lorsque les chicanes réceptrices sont directement fixées sur la paroi inférieure, on diminue ainsi les ponts thermiques. Ils peuvent être encore diminués par utilisation de joints thermiquement isolants ou en les montant sur une bande ou des plots isolants. On peut encore améliorer leur isolation vis-à-vis de la paroi inférieure en les suspendant à des portants. On peut par exemple prévoir des tiges transversales auxquelles sont suspendues ou accrochées les chicanes réceptrices. Dans un tel cas, la surface de contact avec la paroi inférieure est même nulle.

Par « faible surface de contact », on entend une surface de contact inférieure à 10% de celle de la surface totale d'une chicane réceptrice, avantageusement 5% de préférence 3%, notamment 2%, particulièrement 1%, tout particulièrement 0,5%.

Les chicanes réceptrices sont en nombre et localisation variables, dépendant de leur largeur. Par exemple, pour un capteur de 1,20 m de large, on trouve jusqu'à 10 chicanes réceptrices de 4 à 7 cm de large, par exemple 6, 7, 8 ou 10, dans chaque zone externe. On en trouve aussi avantageusement dans la ou les zone(s) centrale(s), de préférence en nombre pair, par exemple 6, 8 ou 10. La largeur des chicanes réceptrices est ici définie comme leur dimension dans la largeur du capteur.

On peut aussi prévoir un chevauchement des chicanes réceptrices de telle sorte que, vu de dessus, on ne peut plus observer la plaque inférieure, de préférence en conservant la possibilité de circulation de l'air de la zone sous les chicanes réceptrices vers la zone au dessus des chicanes réceptrices.

Les 3 zones ont avantageusement à peu près la même largeur. La ou les zone(s) centrale(s) peuvent avantageusement être plus large(s) que chaque zone externe.

Le capteur solaire à air selon l'invention comprend au moins deux cloisons longitudinales sensiblement rectilignes. Leur hauteur est supérieure ou égale à 50% de la hauteur du capteur, avantageusement à 60%, de préférence à 70%, notamment à 80%, particulièrement à 90%. Elle est tout particulièrement égale à 100%. L'utilisation de hauteurs supérieures à 100%, par exemple de 110, 120 ou 130% en gardant la paroi inférieure plane, confère une flèche à la paroi supérieure, ce qui la rigidifie. Par « faible hauteur du capteur », on entend la hauteur du volume dans lequel circule l'air et non la hauteur totale incluant la plaque isolante.

Leur longueur est supérieure ou égale à 30% de la longueur du capteur, avantageusement à 40%, de préférence à 50%, notamment à 60%, particulièrement à 70%. Elle est tout particulièrement supérieure ou égale à 80%.

De préférence, le capteur solaire à air selon l'invention comprend moins de 6, avantageusement 4, de préférence 3, particulièrement 2 cloisons longitudinales.

La ou les cloison(s) transversale(s) installée(s) dans la ou les zone(s) centrale(s) peu(ven)t avoir une hauteur supérieure ou égale à 60% de la hauteur du capteur, avantageusement à 70%, de préférence à 80%, notamment à 90%. Elle peut aussi être égale à 100% de la hauteur du capteur si un ou des orifices, par exemple 2, 3, 4 ou 5 orifices, par exemple circulaires ou polygonaux comme carrés, représentant au moins 10% de sa surface sont prévus dans la cloison. Leur surface individuelle sera alors égale à au moins 2%, avantageusement 5%, de préférence 10%, notamment 15% de la surface de la cloison.

Notamment dans le cas où les cloisons longitudinales ont une hauteur supérieure à 100% de la hauteur du capteur, par exemple de 110, 120 ou 130%, la ou les cloison(s) transversale(s) peu(ven)t avoir une hauteur du même ordre.

Par « hauteur» de la ou des cloison(s) transversale(s), on entend la projection de la ou des cloison(s) transversale(s) dans un plan perpendiculaire aux parois supérieure et inférieure et non la hauteur réelle de la cloison. Par exemple, une cloison de 14,1 cm de large installée à 45° sur la paroi inférieure aura une hauteur de 10 cm. La ou des cloison(s) transversale(s) pourront être montées à 45° ou plus, avantageusement à 70° ou plus, de préférence à 80° ou plus, notamment perpendiculairement aux parois supérieure et inférieure.

La ou les cloison(s) transversale(s) ont avantageusement une largeur supérieure ou égale à 60% de la largeur de la ou les zone(s) centrale(s), avantageusement à 70%, de préférence à 80%, notamment à 90%. Elle peut aussi être égale à 100% ou presque de la largeur de la ou les zone(s) centrale(s).

La ou les cloison(s) transversale(s) ferment avantageusement 60% de la surface de la ou les zone(s) centrale(s) délimitées par deux cloisons longitudinales et les parois inférieure et supérieure, avantageusement à 70%, de préférence à 80%, surface en coupe transversale au capteur.

Dans d'autres conditions préférentielles de mise en oeuvre de l'invention, la ou les cloison(s) transversale(s) sont montée(s) réglables en translation dans la longueur du capteur pour en optimiser l'efficacité.

Dans encore d'autres conditions préférentielles de mise en oeuvre de l'invention, la ou les cloison(s) transversale(s) sont montées inclinables (ou basculantes) pour en optimiser l'efficacité. Cette inclinaison peut être variable. On peut par exemple à cet effet monter la ou les cloison(s) transversale(s) sur un axe rotatif installé horizontalement aux parois et perpendiculairement aux cloisons longitudinales, et munir cet axe de préférence d'un contrepoids réglable ou d'un ressort de rappel agissant en fonction du flux d'air. On peut aussi prévoir un dispositif pour régler manuellement la ou les cloison(s) transversale(s), depuis l'extérieur du capteur, par exemple une tirette, ou à distance par exemple avec un moteur électrique.

La présence de la ou les cloison(s) transversale(s) permet d'installer les entrée et sortie d'air à des emplacements très variés dans le capteur, sans en changer très sensiblement l'efficacité. Ainsi, les entrée et sortie d'air peuvent être non seulement éloignées au maximum l'une de l'autre, mais même éloignées l'une de l'autre seulement de la moitié de la longueur du capteur, voire moins, pour peu qu'elles soient installées de part et d'autre de la ou des cloison(s) transversale(s).

Dans toujours d'autres conditions préférentielles de mise en oeuvre de l'invention, au moins une canalisation de transport de fluide est prévue au contact d'au moins une et de préférence plusieurs ou toutes les chicanes réceptrices, par exemple pour chauffer de l'eau. Cette canalisation sera de préférence installée dans la longueur du capteur, aux extrémités des chicanes réceptrices. Par exemple, vues en coupe transversale, des chicanes réceptrices en forme de V comporteront aux extrémités des branches du V une cuvette semi circulaire dans laquelle viendra reposer un tube de la canalisation, intimement pour optimiser le transfert de chaleur. La canalisation peut être évidemment prévue d'une pièce avec les chicanes réceptrices. Dans ce cas notamment, des collecteurs peuvent être prévus aux extrémités, ou des tuyaux de liaison pour transférer le fluide d'une chicane réceptrice à une autre pour élever le niveau de chauffage.

Comme tout système destiné aux échanges thermiques, les constituants du capteur et en premier les chicanes réceptrices peuvent être dotées d'ailettes pour en augmenter la surface en contact avec l'air circulant dans le capteur.

L'invention sera mieux comprise si on se réfère aux dessins annexés sur lesquels

La figure 1 représente une vue en perspective et de dessus d'un capteur selon l'invention.

La figure 2 représente une vue d'un capteur de la figure 1 en coupe selon AA'.

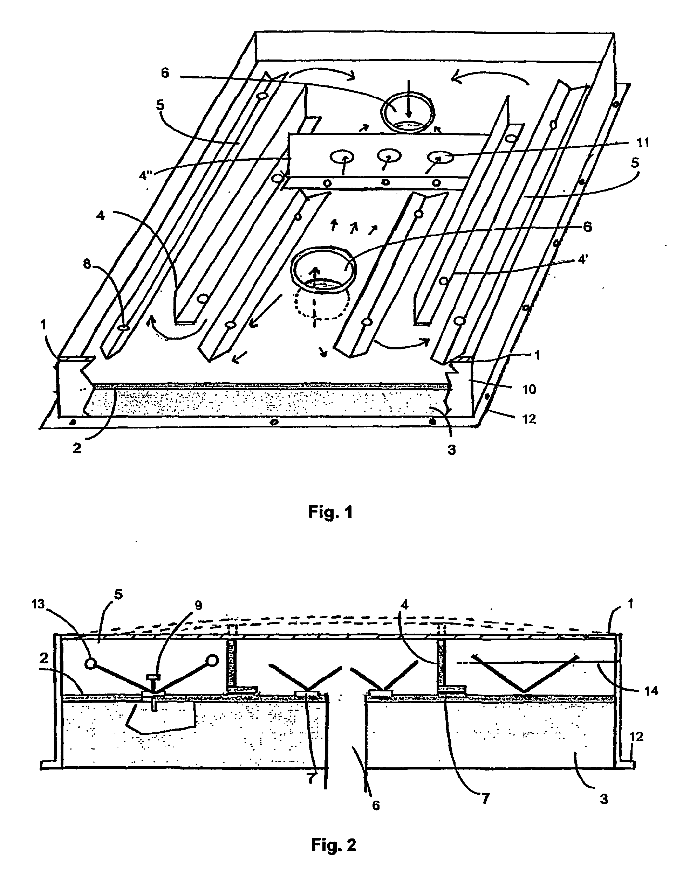

On observe sur la figure 1 la forme généralement parallélépipédique du capteur. On observe notamment la paroi supérieure 1 qui est une plaque rectangulaire transparente supportée par les parois latérales 10 formant un cadre. Une partie du cadre délimite le volume dans lequel circule l'air.

La paroi inférieure 2 délimite aussi le volume dans lequel circule l'air entrant et sortant par les deux orifices 6.

Sous la paroi inférieure 2 est prévue une plaque isolante rigide 3, réalisée ici en mousse polyuréthane, qui supporte la plaque inférieure 2.

Allongées dans la direction de la longueur du capteur, et parallèles entre elles et aux côtés du capteur, sont prévues deux cloisons longitudinales sensiblement rectilignes 4 et 4' réalisées en profilés en forme de L, fixées par la base du L à la paroi inférieure 2.

Une cloison transversale 4", ici une plaque, est installée sensiblement perpendiculairement aux cloisons longitudinales 4 et 4', entre lesdites deux cloisons longitudinales 4 et 4'. L'entrée et la sortie d'air sont prévues de part et d'autre de cette cloison transversale 4". La cloison transversale 4" a la même hauteur que les deux cloisons longitudinales 4 et 4'. Elle est munie de 3 ouvertures circulaires 11. Les ouvertures 11 pratiquées dans la cloison transversale 4", constituent une forme de réglage fixe du débit d'air.

Les cloisons longitudinales 4 et 4' partitionnent le volume interne en 3 zones allongées dans la direction de la longueur du capteur : une zone centrale, comportant la cloison transversale 4", et deux zones externes. Leur longueur est de 75% environ de celle du capteur.

Les flèches permettent de voir la direction de l'air dans le cas où un ventilateur aspire par la bouche 6 de sortie située en haut du capteur sur cette figure.

Bien que les bouches 6 d'entrée et de sortie soient proches, la perte de charge due aux cloisons longitudinales 4 et 4', provoque un déplacement de l'air vers le bas du capteur, et vers l'extérieur pour contourner les barres profilées en forme de L constituant les cloisons longitudinales 4 et 4'.

Des chicanes réceptrices 5, en coupe transversale en forme de V dont l'angle est un angle obtus, sont fixées sur la paroi inférieure 2. Elles aussi sont installées à l'intérieur du capteur. Noircies pour mieux absorber les rayonnements, elles sont parallèles entre elles et aux côtés du capteur. On en trouve une dans chaque zone externe. On en trouve également deux, parallèles, dans la zone centrale. Leur longueur est de 90% environ de celle du capteur.

Les bouches 6 d'entrée et de sortie permettent une circulation de l'air. La bouche 6 d'entrée est installée entre les deux chicanes réceptrices 5 de la zone centrale.

Des trous 8 permettent la fixation des chicanes réceptrices 5, des cloisons longitudinales 4 et 4' et de la cloison transversale 4" sur la plaque inférieure 2 à l'aide de vis et rivets 9.

On observe sur la figure 2 les joints 7 permettant d'isoler aussi bien les cloisons longitudinales 4 et 4' profilées en forme de L que les chicanes réceptrices 5 en forme de V obtus fixées sur la plaque inférieure 2.

Le cadre 10 du capteur est muni d'un rebord 12 pouvant servir à la fixation du capteur, ou pour l'assemblage de plusieurs capteurs entre eux.

On observe encore que les cloisons longitudinales 4 et 4' ont la même hauteur que la hauteur de l'intérieur du capteur.

On observe également la forme en V de la coupe transversale des chicanes réceptrices 5.

On observe aussi sur la chicane réceptrice 5 de gauche des canalisations 13 (non représentées sur la figure 1) prévues aux extrémités des branches du V de la chicane réceptrice 5, pour la circulation de fluide à chauffer.

On observe encore le montage suspendu par un portant 14 (non représenté sur la figure 1), de la chicane réceptrice 5 de droite qui n'est plus en contact avec plaque inférieure 2.

Enfin, la position en pointillés de la paroi supérieure 1 et des cloisons longitudinales 4 et 4' illustre la configuration de la précédente lorsque l'on utilise des cloisons longitudinales 4 et 4' de hauteur plus grande que celle de l'intérieur du capteur, en gardant une la paroi inférieure 2 plate. Il en résulte une flèche en arc de cercle sur la paroi supérieure 1. Cette configuration bombée rigidifie la paroi supérieure 1.

A l'exception de la cloison transversale 4", les autres éléments internes allongés, c'est-à-dire de longueur supérieure à 5 ou 10 cm, du capteur selon l'invention sont principalement installés dans la direction de la longueur du capteur et parallèles entre eux.

## Revendications

1. Un capteur solaire à air, comprenant un caisson, de forme généralement parallélépipédique, comportant une entrée d'air (6) et une sortie d'air (6) situées de part et d'autre du milieu du caisson dans la direction de la longueur, une paroi (1) supérieure, en matériau transparent, une paroi (2) inférieure et des parois (10) latérales, ledit capteur solaire comprenant un seul niveau de passage de l'air, et dans lequel entre la paroi supérieure (1) et la paroi inférieure (2) sont installées des chicanes (5) dont la surface représente au moins 50% de celle de la paroi (1) supérieure ou de la paroi (2) inférieure, ainsi que deux ou plus de deux cloisons (4, 4') longitudinales sensiblement rectilignes dont la hauteur est supérieure ou égale à 50% de la hauteur du capteur, **caractérisé en ce que** lesdites chicanes(5) sont réceptrices du rayonnement solaire, allongées dans la direction de la longueur du capteur, et **en ce qu'**elles ont en coupe transversale une forme évasée et ont une faible surface de contact avec la paroi inférieure (2).

2. Un capteur solaire à air selon la revendication 1, **caractérisé en ce qu'**une cloison transversale (4") est installée sensiblement perpendiculairement aux cloisons longitudinales (4', 4") entre deux cloisons longitudinales (4' et 4"), et entre l'entrée et la sortie d'air.

3. Un capteur solaire à air selon la revendication 1 ou 2, **caractérisé en ce que** les chicanes (5) réceptrices ont une surface qui représente au moins 70% de celle de la paroi (1) supérieure ou de la paroi (2) inférieure.

4. Un capteur solaire à air selon l'une des revendications 1 à 3 **caractérisé en ce que** les chicanes (5) réceptrices sont fixées sur la paroi inférieure (1).

5. Un capteur solaire à air selon l'une des revendications 1 à 4 **caractérisé en ce que** la hauteur des cloisons (4', 4") longitudinales est supérieure ou égale à 70% de la hauteur du capteur.

6. Un capteur solaire à air selon l'une des revendications 1 à 5 **caractérisé en ce que** la longueur des cloisons (4', 4") longitudinales est supérieure ou égale à 60% de la longueur du capteur.

7. Un capteur solaire à air selon l'une des revendications 2 à 6 **caractérisé en ce que** la cloison transversale (4") ferme 60% de la surface de la ou les zone(s) centrale(s) délimitée par deux cloisons (4', 4") longitudinales et les parois inférieure et supérieure.

8. Un capteur solaire à air selon l'une des revendications 2 à 7 **caractérisé en ce que** la cloison transversale (4") est montée réglable en translation dans la longueur du capteur.

9. Un capteur solaire à air selon l'une des revendications 2 à 8 **caractérisé en ce que** la cloison transversale (4") est montée inclinable dans la longueur du capteur.

10. Un capteur solaire à air selon l'une des revendications 1 à 9 **caractérisé en ce que** au moins une canalisation (13) de transport de fluide est prévue au contact d'au moins une chicane (5) réceptrice.

## Claims

1. Solar air heater collector, comprising a box, of parallelepipedal general shape, having an air inlet (6) and an air outlet (6) that are located on either side of the middle of the box in the length direction, an upper wall (1), made of transparent material, a lower wall (2), and side walls (10), said solar collector comprising a single level of air flow, and in which collector there are installed, between the upper wall (1) and the lower wall (2), baffles (5), the area of which represents at least 50% of that of the upper wall (1) or of the lower wall (2), and two or more than two approximately straight longitudinal partitions (4, 4'), the height of which is equal to or greater than 50% of the height of the collector, **characterized in that** said baffles (5), running along the length direction of the collector, receive solar radiation and **in that** they have, in cross section, a flared shape and a small area of contact with the lower wall (2).

2. Solar air heater collector according to Claim 1, **characterized in that** a transverse partition (4") is installed approximately perpendicular to the longitudinal partitions (4', 4"), between two longitudinal partitions (4', 4") and between the air inlet and the air outlet.

3. Solar air heater collector according to Claim 1 or 2, **characterized in that** the receiving baffles (5) have an area that represents at least 70% of that of the upper wall (1) or of the lower wall (2).

4. Solar air heater collector according to one of Claims 1 to 3, **characterized in that** the receiving baffles (5) are fastened to the lower wall (1).

5. Solar air heater collector according to one of Claims 1 to 4, **characterized in that** the height of the longitudinal partitions (4', 4") is equal to or greater than 70% of the height of the collector.

6. Solar air heater collector according to one of Claims 1 to 5, **characterized in that** the length of the longitudinal partitions (4', 4") is equal to or greater than 60% of the length of the collector.

7. Solar air heater collector according to one of Claims 2 to 6, **characterized in that** the transverse partition (4") closes off 60% of the area of the central zone(s) bounded by two longitudinal partitions (4', 4") and the lower and upper walls.

8. Solar air heater collector according to one of Claims 2 to 7, **characterized in that** the transverse partition (4") is mounted so as to be translationally adjustable along the length of the collector.

9. Solar air heater collector according to one of Claims 2 to 8, **characterized in that** the transverse partition (4', 4") is inclinably mounted on the length of the collector.

10. Solar air heater collector according to one of Claims 1 to 9, **characterized in that** at least one fluid transport pipe (13) is provided in contact with at least one receiving baffle (5).

## Patentansprüche

1. Luft-Solarkollektor, der ein Gehäuse mit allgemein parallelepipedischer Form mit einem Lufteinlass (6) und einem Luftauslass (6), die sich auf beiden Seiten der Mitte des Gehäuses in Längsrichtung befinden, eine obere Wand (1) aus durchsichtigem Material, eine untere Wand (2) und Seitenwände (10) umfasst, wobei der Solarkollektor ein einziges Luftdurchgangsniveau umfasst und wobei zwischen der oberen Wand (1) und der unteren Wand (2) Leitflächen (5), deren Fläche mindestens 50% der der oberen Wand (1) oder der unteren Wand (2) darstellt, sowie zwei oder mehr im Wesentlichen geradlinige Längstrennwände (4, 4') installiert sind, deren Höhe größer gleich 50% der Höhe des Solarkollektors ist, **dadurch gekennzeichnet, dass** die Leitflächen (5) Sonnenstrahlung aufnehmen, sich in Längsrichtung des Kollektors erstrecken und dass sie im Querschnitt eine aufgeweitete Form und eine kleine Kontaktfläche mit der unteren Wand (2) aufweisen.

2. Luft-Solarkollektor nach Anspruch 1, **dadurch gekennzeichnet, dass** eine Querwand (4 ") im Wesentlichen senkrecht zu den Längstrennwänden (4', 4") zwischen zwei Längstrennwänden (4' und 4") und zwischen dem Lufteinlass und dem Luftauslass installiert ist.

3. Luft-Solarkollektor nach Anspruch 1 oder 2, **dadurch gekennzeichnet, dass** die Aufnahme-Leitflächen (5) eine Fläche aufweisen, die mindestens 70% der der oberen Wand (1) oder der unteren Wand (2) darstellt.

4. Luft-Solarkollektor nach einem der Ansprüche 1 bis 3, **dadurch gekennzeichnet, dass** die Aufnahme-Leitflächen (5) an der unteren Wand (1) befestigt sind.

5. Luft-Solarkollektor nach einem der Ansprüche 1 bis 4, **dadurch gekennzeichnet, dass** die Höhe der Längstrennwände (4', 4") größer gleich 70% der Höhe des Kollektors ist.

6. Luft-Solarkollektor nach einem der Ansprüche 1 bis 5, **dadurch gekennzeichnet, dass** die Länge der Längstrennwände (4', 4") größer gleich 60% der Länge des Kollektors ist.

7. Luft-Solarkollektor nach einem der Ansprüche 2 bis 6, **dadurch gekennzeichnet, dass** die Quertrennwand (4") 60% der Fläche des mittleren Bereichs oder der mittleren Bereiche, die durch zwei Längstrennwände (4', 4") und die untere und die obere Wand begrenzt wird, schließt.

8. Luft-Solarkollektor nach einem der Ansprüche 2 bis 7, **dadurch gekennzeichnet, dass** die Quertrennwand (4") entlang der Länge des Kollektors translatorisch verstellbar angebracht ist.

9. Luft-Solarkollektor nach einem der Ansprüche 2 bis 8, **dadurch gekennzeichnet, dass** die Quertrennwand (4") entlang der Länge des Kollektors neigbar angebracht ist.

10. Luft-Solarkollektor nach einem der Ansprüche 1 bis 9, **dadurch gekennzeichnet, dass** mindestens ein Fluidbeförderungskanal (13) in Kontakt mit mindestens einer Aufnahme-Leitfläche (5) vorgesehen ist.
